# EUROPEAN PATENT APPLICATION

(11) **EP 0 661 576 A1**
(43) Date of publication of application: **05.07.1995**
(21) Application number: 94117604.2
(22) Date of filing: 08.11.1994
(51) Int. Cl.: G02C 1/02

(54) **A pair of frameless spectacles**

(30) Priority: 28.12.1993 JP 75821/93 U
(71) Applicant: Kobayashi, Mitsuo, Fukui-shi, Fukui-ken (JP)
(72) Inventor: Kobayashi, Mitsuo, Fukui-shi, Fukui-ken (JP)
(74) Representative: VOSSIUS & PARTNER

(57) **Abstract**

Disclosed is a pair of frameless spectacles using single-wire, folded bridge and temple structures. The bridge and temples are made of a length of single wire so bent or folded that the joint section of the bridge or temple has an elongated C-shaped abutment part applied to a selected edge of the lens and an annular joint extending inward from the selected edge of the lens to receive a fastening screw inserted in an associated joint aperture in the lens. Thanks to a continuous linear structure no soldering is required in assembling parts in pairs of frameless spectacles, and accordingly the assembling efficiency is improved. Still advantageously, pairs of frameless spectacles are guaranteed free of breaking at their joints which, otherwise would be often caused when adjusting the degree at which temples are opened or unfolded relative to lenses.

## Description

The present invention relates to a pair of frameless spectacles, particularly to an improvement in or relating to a bridge connecting two lenses side by side and temples connecting to the lenses in a pair of frameless spectacles.

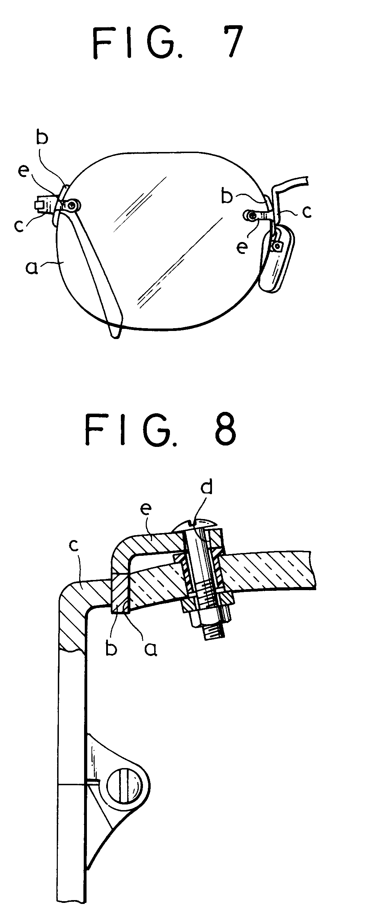

Figs.7 and 8 show a conventional pair of frameless spectacles. As seen from these drawings, an abutment piece "b" is fixed to each end of a bridge member or the end of each temple, and the abutment piece "b" is curved so as to be in conformity with a selected part of the curved circumference "a" of the lens. The abutment piece "b" is soldered both to associated outer and inner joint pieces "c" and "e". The inner joint piece "e" has an aperture "d" made at its end.

The bridge member and temples use these small pieces to be soldered, and soldering is time-consuming work. Still disadvantageously, such bridge and temple assemblies are fragile, or are easy to be broken at their joints when an external force is applied thereto in adjusting the opening or unfolding of the temples relative to the lenses.

One object of the present invention is to provide a pair of frameless spectacles which are guaranteed free of such disadvantages as described above.

To attain this object a pair of frameless spectacles having two lenses connected side by side at their inner edge by a bridge member and two temples each connected to the outer edge of each lens, is improved according to the present invention in that the bridge member and/or the temples are made of a length of single wire bent or folded so as to have, at the opposite ends of the bridge member or at one end of the temple, an elongated C-shaped or annular abutment piece applied to a selected edge of the lens and an annular joint extending inward from the selected edge of the lens to receive a fastening screw inserted in an associated joint aperture in the lens. The bridge member and/or temples may be made of super spring wire.

Other objects and advantages will be understood from the following description of pairs of frameless spectacles according to preferred embodiments of the present invention, which are shown in accompanying drawings:
Fig.1 is a perspective view of a pair of frameless spectacles according to a first embodiment of the present invention;
Fig.2 is an exploded view of the temple used in the pair of frameless spectacles of Fig.1;
Fig.3 is a longitudinal section showing the hinged part of the temple;
Fig.4 shows the manner in which the temple is unfolded;
Fig.5 is a perspective view of the bridge member;
Fig.6 is a perspective view of another temple;
Fig.7 is a front view of a conventional pair of frameless spectacles, showing the manners in which the temple and the bridge member are connected to the lens; and
Fig.8 is a sectional view showing the manner in which the temple is connected to the lens.

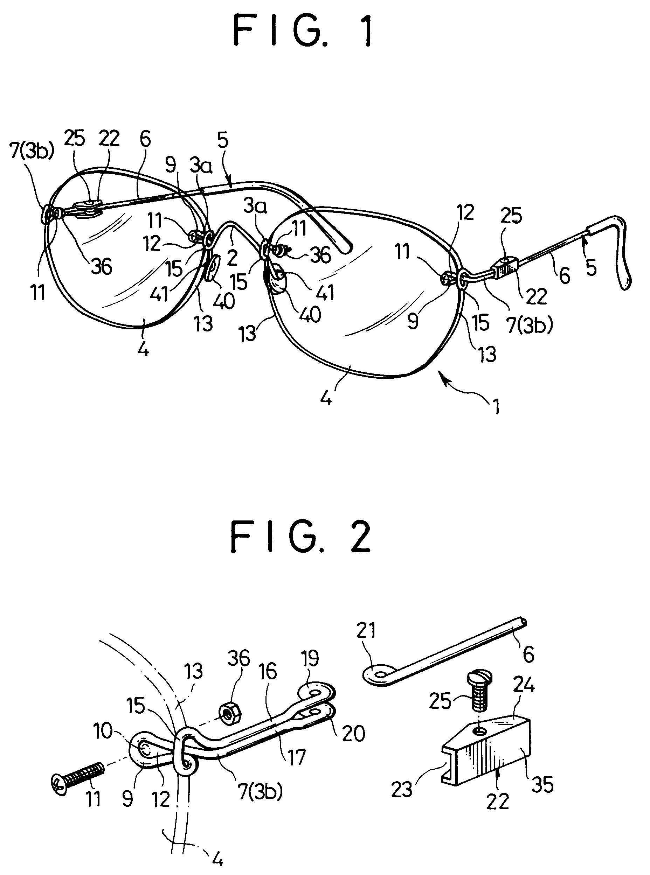

Referring to Fig.1, a pair of frameless spectacles 1 has two lenses 4 and 4 connected side by side at their inner edges by a bridge member 2 as indicated at 3a. Each of two temples 5 is connected at its end to the outer edge of each lens 4.

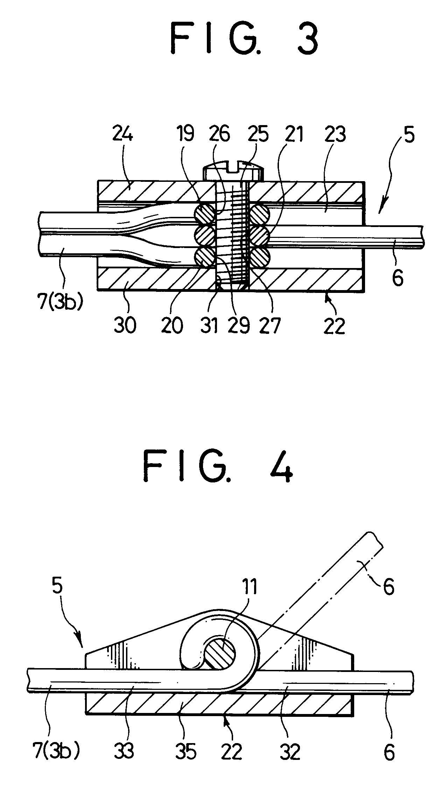

The temple 5 is composed of a linear body 6 and a joint section 7 hinged to the linear body 6. The joint section 7 or 3b is of a single wire folded twice as best seen from Fig.2. The joint section has an elongated C-shaped or annular abutment part 15 applied to a selected edge part 13 of the lens 4 and an annular joint 9 extending inward from the selected edge part 13 of the lens 4 to receive a fastening screw 11 inserted in an associated joint aperture 9 in the lens 4. The rear part of the joint section 7 is composed of twice-folded wire lengths 16 and 17, which are aligned to extend rearward, ending with annular shapes or circular rings 19 and 20. The linear body 6 has a similar annular shape or circular ring 21 at its end. As seen from Fig.3, the circular ring 21 of the linear body 6 is sandwiched between the upper and lower circular rings 19 and 20 of the twice-folded wire lengths 16 and 17, and these rings 19, 20 and 21 are fitted in the recess 23 of a hinge case 22, which has a U-shaped cross section as seen from Fig.2.

A screw 25 is inserted in the apertures of the hinge case 22, passing through the rings 19, 20 and 21, and is threadedly engaged with the tapped aperture 31 of the hinge case 22. Thus, the linear body 6 is hinged to the joint section 7. Fig.4 shows the manner in which the temple 5 is unfolded. As shown, the front end 32 of the temple 6 can be raised from the position (solid line) in which it is aligned with the rear end 33 of the joint section 7 along the inside surface of the hinge case 22 to the position in which it is apart from the inside surface of the hinge case 22 (broken line).

As seen from Fig.1, the joint section 7 or 3b of the temple is attached to the lens 4 with its elongated C-shaped or annular abutment part 15 applied to the circumference 13 of the lens 4, and then, the screw 11 is inserted in the spindle-shaped space 12 of the annular joint 9, the aperture 10 of the lens 4 to appear on the rear side of the lens 4, and the threaded shank of the screw 11 is driven in the nut 36 until the temple 5 is fastened to the lens 4.

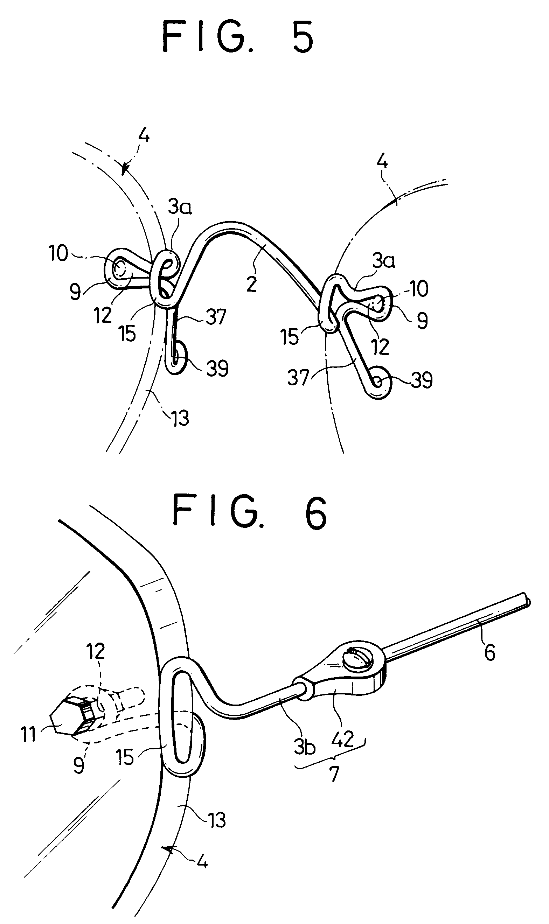

As seen from Figs.1 and 5, the bridge member 2 is made of a length of single wire bent or folded, and each joint end 3a of the bridge member 2 has an elongated C-shaped or annular abutment part 15 applied to a selected edge of the lens 4, and a U-shaped, fold-back annular joint 9 extending inward from the selected edge of the lens 4 to receive a fastening screw 11 inserted in an associated aperture 10 in the lens 4. The bent wire ends with two annular shapes, which provide circular spaces 39 to permit nose pads 40 to be fixed by rods 41.

In connecting the lenses 4 by the bridge member 2, first the elongated C-shaped or annular abutment parts 15 of the bridge member 2 are applied to the circumferences 13 of the lenses 4 with their loops 12 aligned with the apertures 10 in the lenses 4, and then, the screws 11 are inserted in the aligned openings from the front to rear side. Finally, the threaded parts of screws 11 appearing on the rear side of the lenses 4 are driven in the nuts 36, thereby fastening the bridge member to the lenses 4 to connect them side by side.

Fig.6 shows another example of the joint section, which is pivotally connected to an associated temple body 6 by soldering its end 3b to a hinge 42. The joint section 3b is made of a length of wire by bending or folding it. The joint section 3b has an elongated C-shaped or annular abutment part 15 applied to a selected edge of the lens 4 and a hook-like joint 9 extending inward from the selected edge of the lens 4 and ending with circular shape to receive a fastening screw 11 to be inserted in an associated aperture in the lens 4.

A variety of modifications are possible in single-wire, folded bridge and temple joint shapes. A pair of spectacles may have a single-wire, folded bridge according to the present invention and two conventional temples, or may have a conventional bridge and two single-wire, folded temples according to the present invention.

As may be understood from the above, single-wire, folded bridge and temple structures in a pair of frameless spectacles require no soldering in assembling parts in pairs of frameless spectacles, and accordingly the assembling efficiency is improved. Still advantageously, pairs of frameless spectacles are guaranteed free of breaking at their joints which, otherwise would be often caused when adjusting the degree at which temples are opened or unfolded relative to lenses.

## Claims

1. A pair of frameless spectacles having two lenses connected side by side at their inner edge by a bridge member and two temples each connected to the outer edge of each lens, characterized in that the bridge member and/or the temples are made of a length of single wire bent or folded so as to have, at the opposite ends of the bridge member or at one end of the temple, an elongated C-shaped or annular abutment piece applied to a selected edge of the lens and an annular joint extending inward from the selected edge of the lens to receive a fastening screw inserted in an associated joint aperture in the lens.

2. A pair of frameless spectacles according to claim 1 wherein the bridge and/or the temples are made of super spring wire.
